# EUROPEAN PATENT SPECIFICATION

(11) **EP 2 601 039 B1**
(45) Date of publication and mention of the grant of the patent: **18.03.2015**
(21) Application number: 11743915.8
(22) Date of filing: 01.08.2011
(51) Int. Cl.: B29C 65/00, B29C 65/48, B32B 1/08, B32B 15/082, B32B 15/09, B32B 15/092, B32B 15/095, B32B 15/20, F16L 9/147, F16L 47/02

(54) **A FLUID HANDLING ASSEMBLY HAVING A ROBUST INSERT**
EINE ANORDNUNG ZUM FÖRDERN VON FLUIDEN MIT EINEM ROBUSTEM EINSATZSTÜCK
UN ENSEMBLE DE MANIPULATION DE FLUIDE COMPORTANT UN INSERT SOLIDE

(30) Priority: 02.08.2010 US 369855 P
(43) Date of publication of application: 12.06.2013
(73) Proprietor: Lubrizol Advanced Materials, Inc., Cleveland, OH 44141-3247 (US)
(72) Inventor: SILLASEN, Kevin, M., Valley City Ohio 44280 (US); DAUGHERTY, Kevin, B., Fairlawn Ohio 44333 (US)
(74) Representative: Von Kreisler Selting Werner - Partnerschaft von Patentanwälten und Rechtsanwälten mbB
(86) International application number: PCT/US2011/046094
(87) International publication number: WO 2012/018713

(56) References cited:
- WO-A1-98/18879
- WO-A1-99/61833
- US-A- 4 277 091
- US-A1- 2009 139 661
- US-A1- 2009 218 811

## Description

### TECHNICAL FIELD

The invention relates generally to a fluid handling assembly having a robust insert configured to be fitted in a CPVC pipe.

### BACKGROUND

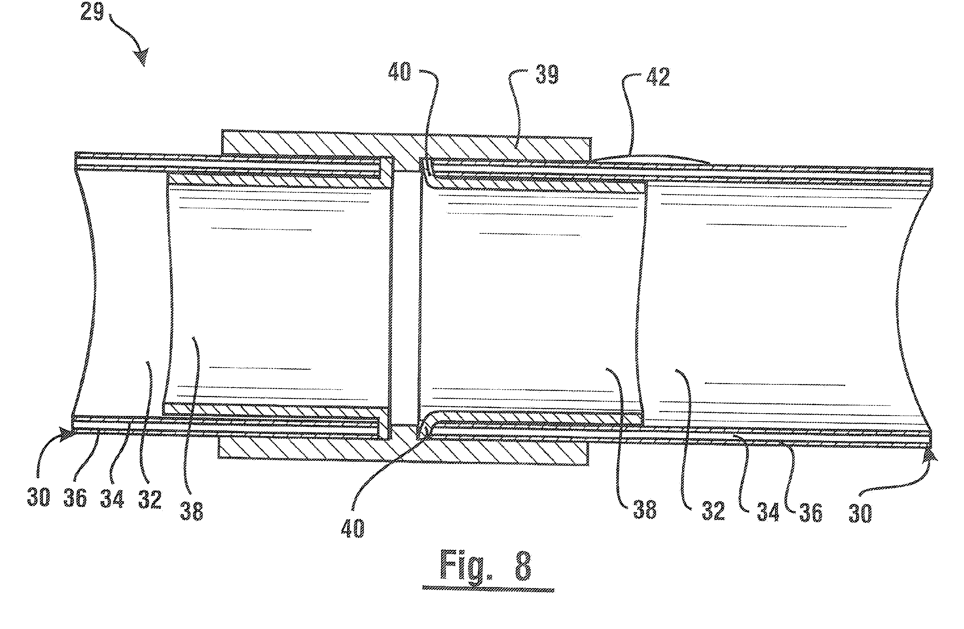

Many buildings are required by code to have fire suppression sprinkler systems. Further, residential structures are increasingly being provided with fire suppression systems. Chlorinated polyvinyl chloride ("CPVC") piping systems are ideally suited for fire sprinkler system applications because of their resistance to corrosion, the lightness of material, ease of installation, and other desirable properties. CPVC pipes may be in the form of a multilayer composite pipe. Fig. 8 illustrates a fluid handling assembly 29 that includes multilayer composite pipes 30. Each multilayer composite pipe 30 may comprise an inner layer 32 of CPVC, an intermediate layer 34 of metal that at least partly surrounds the inner layer 32, and an outer layer 36 of CPVC that at least partly surrounds the intermediate layer 34. Preferably, the intermediate layer 34 of metal completely surrounds the inner layer 32 and the outer layer 36 completely surrounds layer 34. This multilayer composite pipe 30 balances the properties of a metal pipe and a CPVC pipe that includes only CPVC. The CPVC piping system may also include fittings 38, 39 that connect the multilayer composite pipes together end to end. The fittings may comprise inserts which are alternatively referred to herein as bushings 38. Each insert 38 may include an open ended hollow body that is inserted into one of the multilayer composite pipes and a flange 40 that radially extends outwardly and surrounds the edge of the open end of the multilayer composite pipe 30.

WO 99/61833 describes a multilayer composite pipe comprising a hollow inner conduit, a first layer of adhesive, a metallic intermediate layer, a second layer of adhesive and an outer thermoplastic layer.

US 2009/0139661 discloses a composite pipe which has a metal conduit sandwiched between inner and outer conduits of PVC/CPVC as well as PVC/CPVC fittings which allow lengths of pipe to be solvent-cemented in them.

When fluid is flowing at high pressure through pipes 30, the deformation of the flange 40 allows pressure to get behind the flange 40. This pressure may infiltrate between the layers and delaminate the outer layer 36 of CPVC and also push the other layers of the multilayer composite pipe 30 downstream relative to the outer layer 36, creating an undesirable delaminated bubbled area 42 on the pipe as seen in Fig. 8. Thus, a need exists for a durable fluid handling assembly having a fitting that is configured to connect a plurality of multilayer composite pipes together that can avoid this problem.

### ASPECTS OF EXEMPLARY EMBODIMENTS

The present invention is directed to
a fluid handling assembly comprising:
a first pipe, the first pipe including:
   an inner layer comprising a CPVC composition; an intermediate layer comprising a metal at least partially surrounding the inner layer; and an outer layer comprising a CPVC composition at least partially surrounding the intermediate layer;
   and
a first insert having an open ended hollow cylindrical body, wherein the body includes an extending flange portion which extends radially outward from an end of the open ended hollow cylindrical body, and wherein the body includes an extending portion, wherein the extending portion has an outer diameter less than an inner diameter of the first pipe, such that the extending portion of the insert extends inside the first pipe, characterized in that the axial thickness of the extending flange portion is configured with sufficient dimension such that the extending flange portion is longitudinally nondeformable in order to prevent delamination in said first pipe when fluid pressure in the first pipe is up to 37.99 bar (551 psi) for 6 minutes followed by 27.79 bar (403 psi) for 4 hours while at 82.2 °C (180 °F) at both pressures according to ASTM D2846.

Other aspects of exemplary embodiments will be made apparent in the following detailed description of exemplary embodiments and the appended claims.

Also disclosed is a fluid handling apparatus which comprises an insert having an open ended hollow cylindrical body with an extending flange which extends radially outward from the end of the open ended hollow cylindrical body. The body has an outer diameter less than an inner diameter of a pipe such that the insert can be extended inside the pipe. The insert (bushing) preferably has an outer diameter which is slightly tapered such that the outer diameter near the flange is larger than the outer diameter further away from the flange. The taper will normally be from 0.4° to 4° to the horizontal. The taper facilitates the adhering of the bushing into the pipe as the taper keeps the adhesive from being wiped away when the bushing is inserted into the pipe. The pipe comprises an inner layer comprising a CPVC composition and an intermediate layer comprising a metal at least partially, preferably completely, surrounding the inner layer. The pipe further comprises an outer layer comprising a CPVC composition at least partially, preferably completely, surrounding the intermediate layer. The flange is configured to be non-deformable when fluid flows pressure in the pipe is at 37.99 bar (551 psi) or less.

### BRIEF DESCRIPTION OF THE DRAWINGS

The foregoing summary, as well as the following detailed description of exemplary embodiments, will be better understood when read in conjunction with the appended drawings. For the purpose of illustration, there is shown in the drawings certain exemplary embodiments:
FIG. 1 is a sectional view of the composite pipe of the fluid handling assembly of an exemplary embodiment;
FIG. 1A is a sectional view of a composite pipe of the fluid handling assembly of the exemplary embodiment which is bent;
FIG. 2 is a depiction of the fluid handling assembly showing the multilayer composite pipe without an insert and the fitting joined together;
FIGS. 3A, 3B, and 3C are schematic views of the insert bushing of the fluid handling assembly that is used to join the multilayer composite pipe with the fittings;
FIG. 4 is a cross sectional view of the insert bushing and the multilayer composite pipe as joined together;
FIG. 5 is a schematic view of one possible embodiment to manufacture the multilayer composite pipe;
FIGS. 6A and 6B are cross sectional views of a modified fitting which can be used;
FIG. 7 is a cross sectional view of the fluid handling assembly showing multilayer composite pipes, a fitting, and inserts of the exemplary embodiment; and
FIG. 8 is a cross sectional view of a prior art fluid handling system.

### DETAILED DESCRIPTION OF THE EXEMPLARY EMBODIMENTS

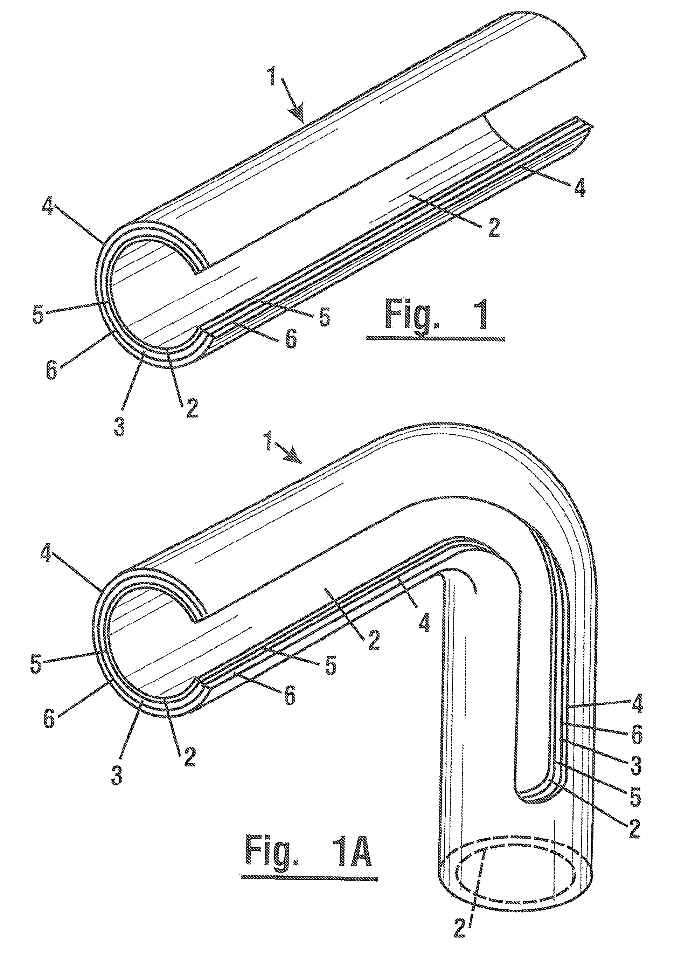

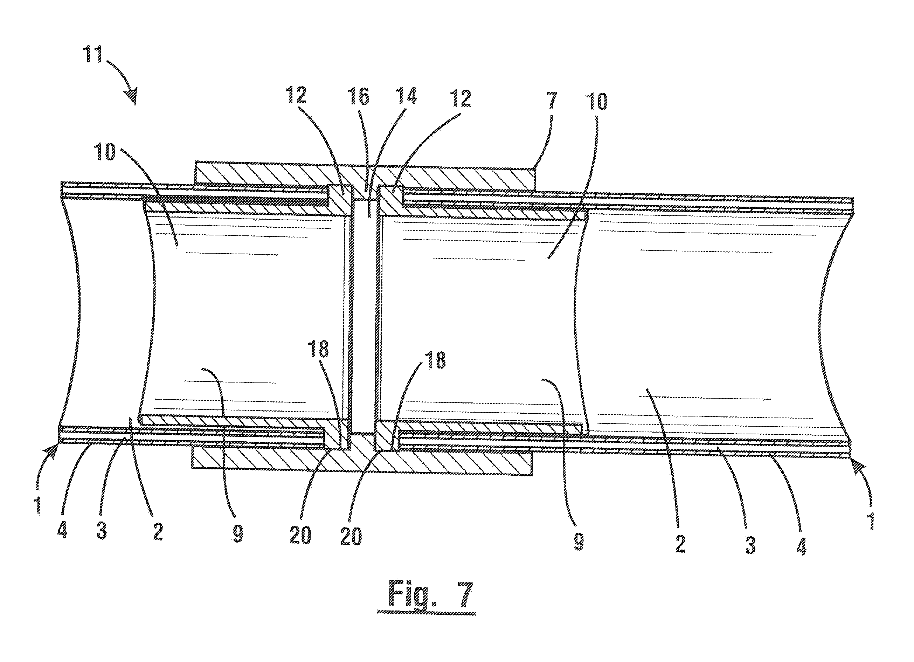

Turning now to the drawings, the exemplary embodiment is a fluid handling assembly 11 as seen in FIG. 7 that comprise a multilayer composite pipe 1, a fitting 7, and an insert or bushing 9. The multilayer composite pipe 1, as shown in FIG. 1, comprises an inner layer 2 formed into hollow conduit, a metallic intermediate layer 3, which surrounds the inner layer 2, and an outer layer 4 composed of an amorphous thermoplastic polymer surrounding the metallic intermediate layer. An adhesive layer 5 extends between the outer surface of the inner layer 2 and the inner surface of the metallic intermediate layer 3. A second adhesive layer 6 extends between the outer surface of the metallic intermediate layer 3 and the inner surface of the outer layer 4.

The hollow inner conduit is formed by a hollow length of a pipe having a completely closed tubular outer surface and an opposing closed tubular inner surface. The hollow inner conduit can be made either from a rigid semi-crystalline thermoplastic plastic or a rigid amorphous thermoplastic.

A rigid amorphous thermoplastic material is a thermoplastic material which can be stretched beyond its yield point. A rigid amorphous thermoplastic as used herein is a thermoplastic material having a modulus of elasticity, either in flexure or in tension, greater than 20684 bar (300,000 psi) at 23°C and 50% relative humidity when tested in accordance with ASTM Test Methods D790, D638, or D882. Generally, amorphous polymers have less than 15 percent crystallinity. Further information on amorphous thermoplastic polymers can be found in Alfrey, Jr., Mechanical Behavior of High Polymers, John Wiley & Sons, Inc., (New York, 1965), pp. 510-515.

Examples of some suitable amorphous thermoplastics which can be used to form the first layers as defined herein include chlorinated polyvinyl chloride ("CPVC"), polyvinyl chloride ("PVC"), polyvinylidene fluoride ("PVDF"), polyether sulfone and polyphenyl sulfide, polycarbonate, acrylics such as methyl methacrylate, and styrenics such as acrylonitrile styrene butadiene polymers ("ABS"). The most preferred amorphous thermoplastic is CPVC.

Generally, the thickness of the inner hollow conduit will be dependent upon the desired final thickness of the thermoplastic composite pipe. Preferably, the outer diameter of inner hollow conduit should be greater than the bore of the pipe by at least 0.1 mm. The most preferred amorphous thermoplastic used to form the hollow inner conduit is CPVC. In one exemplary embodiment, the CPVC is one to two times as thick as the metallic intermediate layer. In the most preferred embodiment, the CPVC layer is 1.5 times as thick as the metallic intermediate layer. In the most preferred embodiment, the CPVC forming the hollow inner conduit has a thickness of 0.6 mm. The hollow inner conduit is preferably formed by an extrusion process although any other suitable process may be used to form the hollow conduit.

The first adhesive layer used between the outer surface of the inner layer 2 and the inner surface of the metallic intermediate layer 3 is any suitable bonding agent that can be used to permanently bond the thermoplastic polymer forming the inner hollow conduit to the metallic intermediate layer 3. The adhesive is necessary since the thermoplastic material of the inner hollow conduit itself generally will not bond to the metallic inner layer. Preferably, the bonding agent can adapt to different coefficients of thermal expansion due to the differences in the materials between the two layers. The adhesive can be sprayed, extruded, brushed or applied in any manner to the outer surface of the inner hollow conduit. If the adhesive is sprayed, the adhesive can be diluted if so recommended by the manufacturer. The first adhesive is preferably applied to the entire outer surface of the inner layers. Alternatively, the first adhesive layer can be applied as a series of rings evenly spaced around the outer surface of the inner layers. Generally, the first adhesive is applied to yield a layer having a thickness of 0.01 mm to 0.5 mm. The preferred thickness of the first adhesive layer is 0.1 mm. The most preferred method to apply the adhesive is to coat both sides of the metallic intermediate layer 3 with the adhesive prior to the metallic intermediate layer 3 contacting inner layer 2 or outer layer 4.

The first adhesive can be any suitable adhesive material. Examples of suitable adhesives include polyvinyl chloride and polyvinyl chloride copolymers, polyurethanes or other isocyanide based polymers, chloroprene and its copolymers, epoxides, acrylates, polyethylene copolymers. If polyethylene copolymers are used, it is preferred that the co-monomer is a vinyl acetate or maleic anhydride. The preferred adhesive layer when used in conjunction with a CPVC inner hollow conduit is an adhesive applied to both sides of the metallic layer. The adhesive is commercially available from Mercural Corp. of Colmar, France and is known as CIRE-10B. The adhesive is believed to be a bilayer adhesive selected from (i) a thermosetting epoxy with a high molecular weight polyester adhesive for a primer layer, and a heat-activatable, crosslinkable polyurethane top coat, (ii) an acetophenone-formaldehyde resin, optionally modified with epoxy, and (iii) an anti-corrosion primer based on an epoxy-modified high molecular weight copolyester-urethane polymer along with a top coat based on a high molecular weight crosslinked copolyester-urethane polymer. The bilayer adhesive on the metallic layer is dried to form a solvent free dry adhesive before being used in the construction of the composite pipe. The adhesive has a thickness of from 10 to 50 micrometers. The adhesive is heat activated by heating to a temperature above 48.9°C (120°F). The heat activation occurs during the process of producing the pipe.

The intermediate layer 3 of the multilayer composite pipe can be formed from any suitable metallic material, provided that it has a tensile strength that is greater than the tensile strength of the plastic. Examples of suitable metallic intermediate layers include ferrous materials, copper, stainless steel, brass, and aluminum materials. In addition, alloys can be used so long as they provide support to the thermoplastic materials used to form the inner and the outer layers of the composite pipe structure.

The metallic intermediate layer 3 is preferably made from a smooth metallic material. Generally, the thickness of the metallic intermediate layer should be in the range of 0.01-40 mm. Preferably, the thickness can be in the range of 0.1 to 4.0 mm and with a thickness of 0.3 to 1.5 being more preferable. The value of 0.4mm being the most preferred for aluminum. For a steel metallic layer, the thickness of 1.0mm is preferred. The metallic intermediate layer can be in the form of a conduit with open ends which surrounds the inner hollow conduit. Alternatively, as described below in further detail, the metallic intermediate layer can be formed from metal sheeting wrapped around the inner hollow conduit. The sheeting material can be joined together by a method such as welding. When it is desired to make a pipe which is bendable, the most preferred material used as the metallic intermediate layer is aluminum. For non-bendable pipe, such as fire sprinkler pipe, steel is the preferred metal used. If the metallic layer is not welded, it may be overlapped when placed around the inner layer 2. The metallic intermediate layer can overlap due to wrapping of the metal at an angle or just plain overlapping of the metal in which opposing sides of the material abut each other. Preferably, when aluminum is used, the thickness is in the range of 0.5 to 5.0% of the outer diameter of the multi-layer composite pipe. In the most preferred embodiment, the aluminum layer is 0.4 mm thick, and the steel layer is 1.0mm thick.

A second adhesive layer is used in the multilayer composite pipe and is placed on the outer surface of the intermediate layer 3. This adhesive used in the intermediate layer can be any suitable bonding agent that can be used to permanently bond the outer surface of the metallic intermediate layer to the inner surface of the outer thermoplastic layer 4. Preferably, the bonding agent can adapt to different coefficients of thermal expansion due to the differences in the materials between the two layers. The adhesive can be sprayed, brushed, extruded, or applied in any manner to the surface. The adhesive can be applied to the entire outer surface of the intermediate layer 3. Alternatively, the adhesive layer can be applied as a series of rings evenly spaced around the outer surface of a second material. The adhesive is applied generally to a thickness of 0.01 to 0.5 mm, preferably, 0.1 mm. The most preferred method is to apply the adhesive to both sides of the metal layer as described above for the first adhesive layer.

This second layer of adhesive is preferably the same as the first layer of the adhesive used between the outer surface of the inner hollow conduit and the inner surface of the second layer. Alternatively, the adhesive can also be different so long as a bond is established between the outer surface of the metallic intermediate layer and inner surface of the third layer. Examples of suitable adhesives include polyvinyl chloride and polyvinyl chloride copolymers, polyurethanes or other isocyanate based polymers, chloroprene and its copolymers, epoxides, acrylates. The preferred adhesive layer when the third layer is chlorinated polyvinyl chloride is the CIRE-10B from Mercural Corp. as described above for the first adhesive layer. The methods of application as well as the thickness used for this second adhesive layer are as described above with respect to the first adhesive layer.

The outer layer of the multilayer composite pipe is formed from a rigid plastic, as defined above. Preferably, the outer layer is comprised of a rigid plastic which is an amorphous thermoplastic polymer. Suitable amorphous thermoplastics which can be used to form the outer layer of the multilayer composite pipe as defined herein include chlorinated polyvinyl chloride ("CPVC"), polyvinyl chloride ("PVC"), polyvinylidene fluoride ("PVDR"), polyether sulfone and polyvinylidene sulfide polycarbonate, acrylics such as methyl methacrylate, and styrenics such as acrylonitrile styrene butadiene ("ABS"). In one exemplary embodiment, the outer layer of the multilayer composite pipe can be made from the same material as the inner hollow conduit. Alternatively, in some embodiments the outer layer can be made from a different amorphous thermoplastic material than the inner layer forming the hollow conduit if the inner layer is made from an amorphous thermoplastic material. However, care must be taken in choosing the materials to ensure that the multilayer composite pipes can be joined together to form a composite system. Generally, the thickness of the outer layer will be dependent upon the desired final thickness of the multilayer composite pipe. Preferably, the outer layer will have a thickness as compared to the metallic intermediate layer in the range of 1:5 to 5:1. Preferably, thickness of the outer layer when compared to the metallic intermediate layer is in the ratio of 1:3 to 3:1. In the most preferred embodiment of the multilayer composite pipe, the outer layer is formed from CPVC. In the most preferred embodiment, the CPVC outer layer and inner layer each has a thickness of 0.6 mm. If the composite pipe is intended to be bendable the inner and outer layer of CPVC should not be greater than 3.18mm (0.125") CPVC which is thicker than 3.18mm has a tendency to crack in the radius of the bend. Also, the thickness of the inner and outer layer should not be less than 0.6mm as a thickness thinner than 0.6mm is too thin to be reliably solvent cemented. If the composite pipe is not intended to be bendable, such as a fire sprinkler pipe using a steel metal layer, the inner and outer layer of CPVC can be thicker than with a bendable pipe. A minimum thickness is still necessary to assure good solvent cementable pipe, as stated above.

Preferably, the multilayer fluid conduit is provided with outer diameters conforming to nominal piping or tubing outer dimensions, which can be copper tube sizes (CTS) or iron pipe sizes (IPS), such as, for example, Schedule 40 and/or 80 as defined in ASTM F438 or SDR 11 or defined in ASTM D2846 or other ASTM standards or DIN 8063, and 8079 standards and/or BS 7291 standards. This is preferred so that fittings can be used in a multilayer fluid conduit system of the exemplary embodiment. Pipe and tubing are normally sized by specified outer diameters. The fittings with which they are used are sized internally in relation to the standard outer diameters specified for the pipes to be received in the fittings. The only limitation in size of the multilayer composite pipe of the exemplary embodiment is the ability to bend the pipe, if such a bend is desired. That means that the diameter of the composite pipe cannot be so large that the composite pipe structure cannot be bent. A schematic example of a bent pipe of the exemplary embodiment is shown in FIG. 1A. However, all the layers should be sufficiently thick to provide the strength and rigidity needed for a safe, leak proof system for the intended uses composite pipe in a fluid conduit system, whether the fluid is a gas or a liquid, or a slurry.

An exemplary embodiment comprises a multilayer composite pipe in which the inner layer 2 forming the hollow conduit is made from CPVC. The metallic intermediate layer 3 is aluminum foil, and the outer layer 4 is also CPVC. The thickness of the aluminum layer is equal to 1 to 5 percent of the outer diameter of the multilayer composite pipe. The chart listed below illustrates the various pipe sizes. The measurement of the layers as well as the total measurement is listed in mm. The pipe sizes are based on the DIN 8079 Standard.

| Pipe Size (diameter) | CPVC inner layer thickness | Aluminum layer thickness | CPVC outer layer thickness | Total wall thickness |
|---|---|---|---|---|
| 16 | 0.6 | 0.4 | 0.6 | 1.6 |
| 20 | 0.6 | 0.4 | 0.6 | 1.6 |
| 25 | 0.6 | 0.4 | 0.6 | 1.6 |
| 32 | 0.6-1.0 | 0.4-0.8 | 0.6-1.0 | 1.6-2.8 |
| 40 | 0.6-1.0 | 0.4-0.8 | 0.6-1.0 | 1.6-2.8 |
| 50 | 0.6-1.5 | 0.4-0.8 | 0.6-1.5 | 1.6-3.8 |
| 63 | 0.6-1.5 | 0.4-0.8 | 0.6-1.5 | 1.6-3.8 |

Most preferably, the aluminum layer is 1.5% of the outer diameter of the pipe. The ratio of the thickness of either CPVC layer to the thickness of aluminum in the pipe is 1:5 to 3:1. Most preferably, the ratio of the thickness of the CPVC to the thickness of aluminum in the preferred multilayer composite pipe is 3:2. The adhesive used in this exemplary embodiment on both sides of the metallic intermediate layer is an adhesive compatible with CPVC such as CIRE-10B, available from Mercural Corp., as described above in further detail.

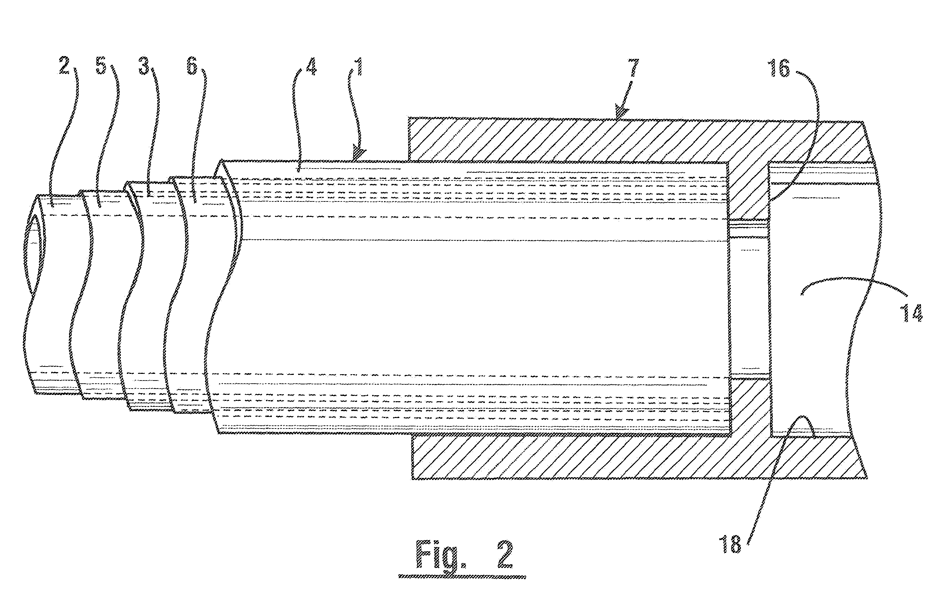

FIG. 2 diagrammatically depicts a portion of a fluid conduit system of the exemplary embodiment incorporating a multilayer composite pipe. A plurality of the multilayer composite pipes of the exemplary embodiment is connected end to end by a plurality of joints and/or fittings 7. These joints and/or fittings include, but are not limited to, adapters, straight couplings, elbows, bushings, crosses, caps, plugs, flanges, and/or unions.

In one exemplary embodiment, fittings or mechanical joints can be used to join the multilayer composite pipe. Examples of mechanical joints which can be used include push fit fittings to provide a leak proof joint or to provide a leak proof assembly. Examples of suitable push fit fittings include the Universal fitting from Genova Plastics, Part PI from John Guest as well as Straight Coupling TI part from IMI Yorkshire fittings.

With the non-mechanical types of fittings, solvent cements can be used. Any solvent cement applicable to the particular materials used to form the multilayer composite pipe and the fitting can be used. Alternatively, a heat fusion bonding system can be used to join the fitting with the multilayer composite pipe. Such systems are described in the ASTM F412, under the definition of heat fused joints. Any suitable heat fusion bonding method can be used. The fitting 7 shown in Figs. 2 and 7 generally includes a hollow cylindrical body 14 having a continuous annular land 16 formed on an inner surface 18 of the body that extends radially inwardly.

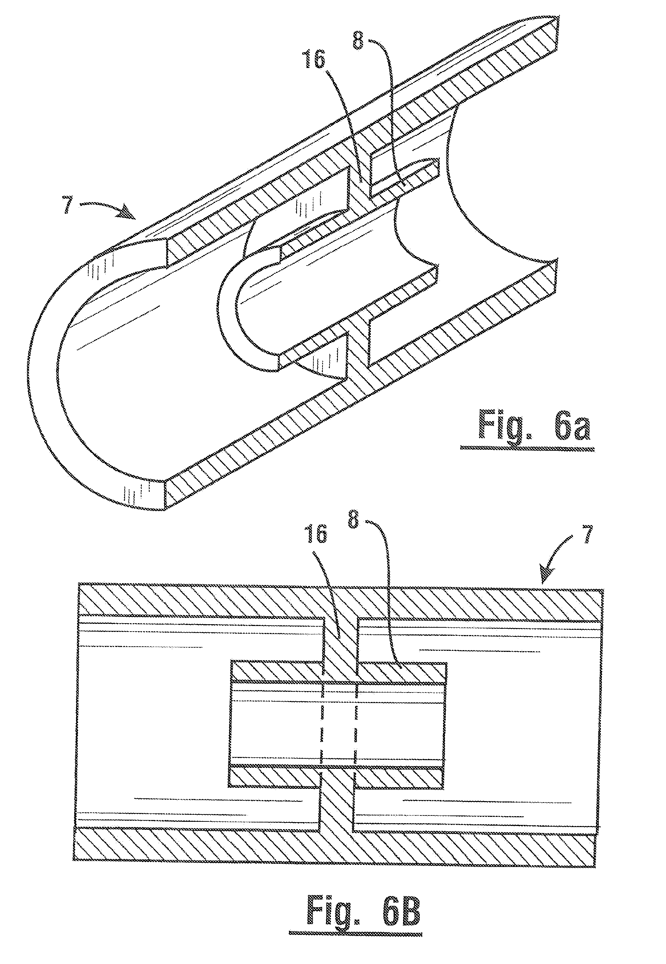

In another exemplary embodiment, as shown in FIGS. 6A and 6B, the fittings can be modified to contain a lip portion 8 that extends axially out from the interior of the fitting to matingly join the inner surface of the hollow tube conduit which forms the inner layer. A solvent cement material can be used to join this type of fitting to the multilayer composite pipe. Although this type of fitting can be used, it is not the preferred fitting for solvent cementing because the hydraulics of the solvent cement may prevent the pipe from completely entering the joint (weakening the resulting cemented joint).

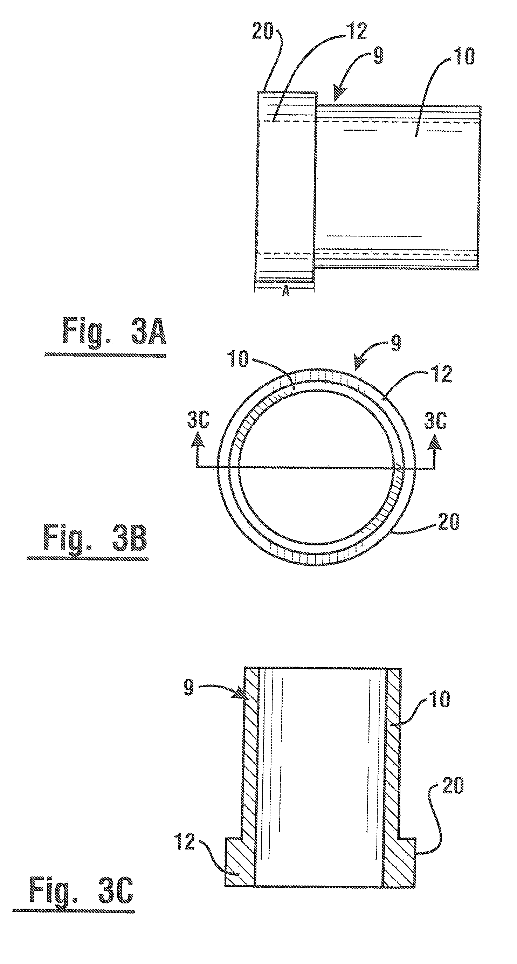

FIGS. 3A, 3B and 3C illustrate the exemplary insert or bushing 9 which is used to join the multilayer composite pipe and fittings (either conical or cylindrical). The insert 9 comprises an open ended, hollow cylindrical body 10 with a radially extending flange 12 which radiates outwardly from the end of the body 10. The outer diameter of the inner hollow body 10 of the insert 9 should be slightly less than the inner diameter of the multilayer composite pipe 1, provided, however, that the difference in the outer diameter of the pipe 1 and the inner diameter of the pipe 1 does not exceed that suggested in ASTM D2846.

The exemplary flange 12 is configured to have the same outer diameter as the multilayer composite pipe 1. An adhesive can be used to permanently bond the inner surface of the multilayer composite pipe to the outer surface of the hollow cylindrical body 10 of the insert 9. Preferably, this insert 9 is made from the same material as the inner hollow conduit 2. The flange 12 of this insert 9 has a minimum thickness greater than 1.422 mm (0.056 inch), and preferably greater than 2.54 mm (0.1 inch), in the axial direction for a 50.8 mm (2 inch) IPS fire sprinkler pipe. The preferred thickness of flange 12 as shown by line A in FIG. 3A is 6.35 mm (0.25 inch) or more for pipe sizes up to 101.6 mm (4 inches) in diameter. For larger diameter pipes, the thickness of flange 12 may need to be thicker to withstand the force exerted, especially if high pressure is present in the piping system, as can be well understood by those skilled in the art. For example, for a 101.6 mm (4 inch) diameter pipe (and intermediate sizes up to less than 152.4 mm (6 inches)), the thickness of flange 12 (line A) should be 6.35 mm (0.25 inch) to 12.7 mm (0.5 inch). For a 152.4 mm (6 inch) diameter pipe (and intermediated sizes less than 203.2 mm (8 inches)), the thickness of flange 12 should be 7.62 mm to 15.24 mm (0.3 to 0.6 inch) and for an 203.2 mm (8 inch) diameter pipe (and intermediate sizes less than 304.8 mm (12 inches)), the thickness of flange 12 should be 10.16 to 20.32 mm (0.4 to 0.8 inches). The thickness of flange 12 is very much dependent on the pressure the pipe is designed to carry and on the diameter of the pipe. The thickness of flange 12 should be sufficient to prevent deformation at the designed pressure the pipe needs to withstand.

FIG. 7 illustrates the exemplary fluid handling assembly 11 comprising first and second inserts 9, the fitting 7, and multilayer composite first and second pipes 1 assembled together. The body 10 of the first insert 9 is inserted into the first pipe 1 until the flange 12 abuts the annular edge of the open end of the first pipe 1. Likewise, the body 10 of the second insert 9 is inserted into the second pipe 1 until the flange 12 abuts the annular edge of the open end of the second pipe 1. Adhesive such as a solvent cement may be applied between the inner hollow conduit 2 of the first and second pipes 1 and the hollow cylindrical body 10 of the inserts 9 to bond the inserts 9 to their respective pipes 1 as previously mentioned. The coupling fitting 7 is secured, such as with solvent cement, to the first and second pipes 1 to join them together. The land 16 of the fitting 7 is positioned between the flange 12 of the first insert 9 and the flange 12 of the second insert 9. Each flange 12 has an outer surface 20 at the peripheral edge of the flange 12 that abuts the inner surface 18 of the fitting 7. Adhesive such as solvent cement may be applied between the flanges 12 and fitting 7 to secure the inserts 9 to the fitting 7.

A flow test performed on this fluid handling assembly 11 using a 50.8 mm (2 inch) IPS size fire sprinkler pipe assembly which used a 1.0mm steel layer revealed that for each of the first and second flanges 12 (having a thickness of 6.35 mm (0.25 inch)), the flange 12 did not longitudinally deform when a fluid pressure was applied in the first and second pipes at 37.99 bar (551 psi) for six minutes. Another flow test performed on this fluid handling assembly 11 revealed that for each of the first and second flanges 12 (having a thickness of 6.35 mm (0.25 inch)), the flange 12 did not longitudinally deform when a fluid pressure was applied in the first and second pipes 1 at 27.79 bar (403 psi) for four hours. A comparative test was performed with a flange 12 having a thickness of 1.27 mm (0.05 inch) (prior art) and the flange 12 did longitudinally deform and caused delamination in the pipe to create a bubble 42 as shown in FIG. 8.

This exemplary configuration insert 9 significantly reduces the likelihood of the above-mentioned delamination of the outer layer 4 of the pipe 1 and movement of the other layers of the pipe longitudinally downstream relative to the outer layer 4 under the above-mentioned high fluid pressure conditions. This is due to the configuration which includes the relatively high axial thickness of the flange 12 which makes the flange not readily deformable. Further, the relatively high axial thickness of the flange 12 presents a substantial surface area about the periphery of the flange 12 that can be bonded to the inner surface 18 of the fitting 7. This relatively large surface area reduces the risk of an occlusion that would allow the pressure to migrate backwards and delaminate the outer layer 4 and move the other layers of the pipe 1 downstream.

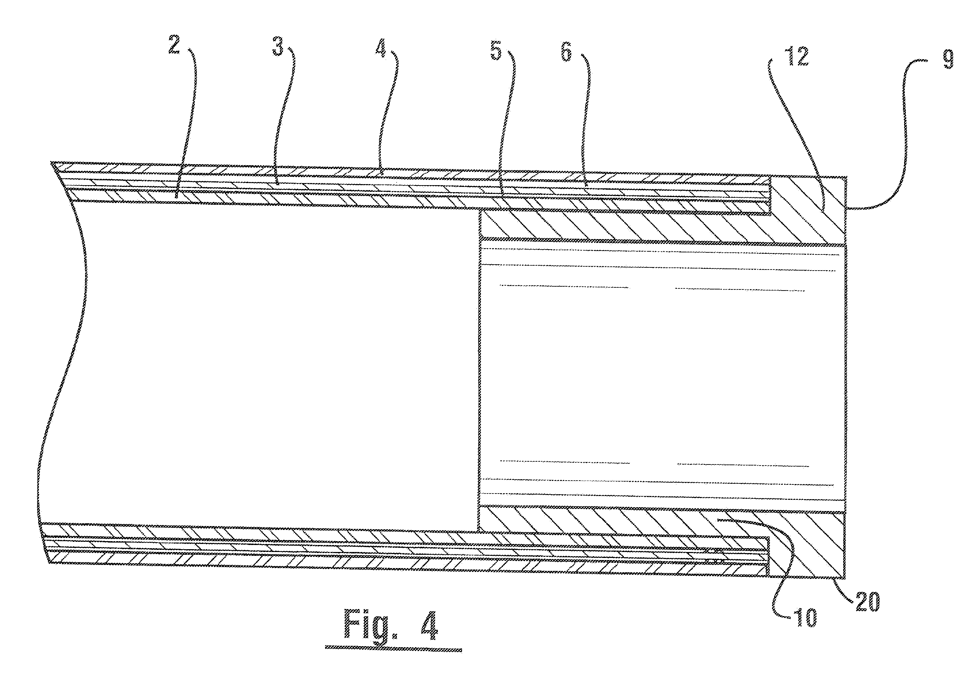

The solvent cement used in exemplary embodiments to bond the inner layer 2 forming the hollow conduit with the hollow cylindrical body 10 of the insert 9 can be any suitable bonding agent that can be used to permanently bond them together. The solvent cement can be sprayed, brushed or applied in any manner to the outer surface of the insert. Alternatively, the solvent cement can be applied to the inner surface of the hollow inner conduit. Any solvent cement can be used provided a suitably strong bond is established between the desired surfaces. The preferred adhesive layer complies with the requirements of ASTM F493 if the first and third layers of the multilayer composite pipe are CPVC. Examples of suitable solvent cements are CPVC solvent cements available from IPS, Oatey, Verhagen and/or Henkel. The multilayer composite pipe with an insert may be joined with a fitting with the use of a bonding agent as shown in the cross sectional view of FIG. 4.

Any type of bonding agent suitable for thermoplastic materials can be used to join the multilayer composite pipe containing an optional insert with a fitting provided that the bonding agent permanently bonds the surface of the multilayer composite pipe to the surface of the fitting and provides for a leak-free joint. For CPVC pipe, exemplary bonding agents include one-step solvent cements and two-step solvents cements. Examples of suitable bonding agents for multilayer composite pipes that contain CPVC include those which comply with the requirements of ASTM F493 and remain leak proof. The bonding agents are applied directly and are suitable for ambient temperature use (0°F. (-18°C.) to 210°F. (99°C.)).

In an exemplary embodiment, the multilayer composite pipe using aluminum as the metal layer can be bent anywhere from 1° to 180°. The degree of bonding for the composite pipe of this invention is dependent on the size of the pipe (diameter), the thickness of the metal layer, and the thickness of the inner and outer CPVC layers. For a 19.05 mm (0.75 inch) diameter pipe with a 0.4 mm aluminum layer and 0.6 mm CPVC inner and outer layer, the pipe can be easily bent to 90° with a radius of the bend of 114.3 mm (4.5 inches). The multilayer composite pipe can be bent by any means which can be used to form a small radius bend so long as such means does not cause the pipe to kink. Preferably, a tube bender is used to bend the multilayer composite pipe structure. A tube bender available to those in the art for bending metal pipe can generally be used. For example, Tube Bender H824 from the Lakeland Manufacturing Company, as well as a Greenlee 181 Conduit Bender from the Greenlee Company can be used. A bent composite pipe is shown in FIG. 1A.

In an alternative exemplary embodiment, the multilayer composite pipe, as well as, the insert is heat fused to the fitting. That is, the thermoplastic layers are heated to a temperature above those at which the material softens. The layers of the composite pipe (as well as the insert) are then joined to the fitting. Various known suitable heat fusion techniques can be used. U.S. Patent Application 2009/0139661 A1 shows in detail the preferred process for making the composite pipe.

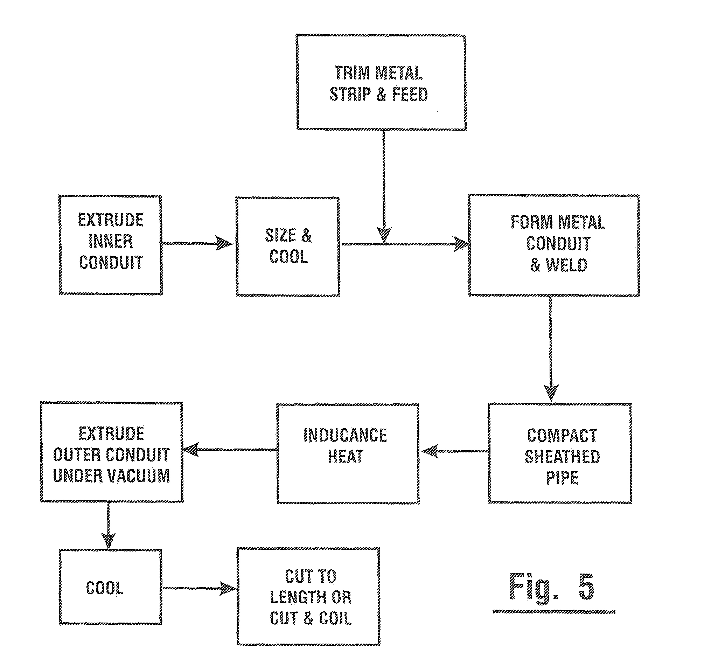

FIG. 5 depicts in block form the exemplary steps of one method for fabricating the multilayer composite pipe. Machines that perform these steps are commercially available from Nexane Deutschland GmbH.

Referring to FIG. 5, there is diagrammatically illustrated the preferred process for making the multilayer composite pipe 1 using CPVC and a metal inner layer. The other components of the fluid handling assembly 11, such as inserts (bushings), fittings, and the like are made by conventional injection molding with appropriately configured dies.

Except for the step of trimming the edges of an adhesive-coated metal strip, coated on both sides, which step may be undertaken independently of the other processing steps, provided the strip is trimmed just prior to feeding it to a metal forming and welding step, the process steps are sequential, and are as follows:

### Extruding the inner layer of CPVC:

Powder or pellets of CPVC composition are fed from a hopper into a twin screw extruder operating at a temperature in the range from 193°C to 204°C (280°F to 420°F) to produce an extrudate having the desired thickness and outside diameter.

### Cooling the inner layer of CPVC.

The hot inner layer is vacuum sized in a sizing die and sleeve to control the outside diameter of the inner layer within the desired limits, and extruding through a pipe die to produce a thin walled pipe. The sized inner layer is then cooled to a temperature in the range from 21°C to 37.74°C (70°F to 100°F). Preferably, the cooled inner layer is drawn through a dancing roll to control the diameter and thickness before the inner layer is fed to a metal forming and welding machine.

### Feeding the metal strip to a trimmer.

The edges of the metal strip, coated on both sides with an adhesive, preferably a bilayer adhesive which is dried to form a thin dry layer having a thickness in the range from 10 to 50 micrometers, are freshly trimmed to the desired width. The trimming of the metal sheet is for the purpose of removing any oxidized metal from the edges, which are to be welded together. Thus, the trimming step should occur within 10 minutes, preferably no longer than 1 minute, before being formed around the inner layer of CPVC. Oxidation at the edges can result in poor welds.

### Forming and welding the metal strip to form the intermediate metal layer.

The trimmed metal strip is fed immediately beneath the inner layer conduit of CPVC as it enters the forming and welding machine. The metal strip is formed around the inner layer of CPVC so that the trimmed edges provide a gap, about 0.25mm (0.010 inch), small enough to allow a laser of appropriate intensity to continuously butt-weld the metal strip longitudinally, so as to form a completely closed metal layer around the inner layer of CPVC. The intensity of the laser is chosen so as not to damage the polymer of the inner layer by overheating the inner layer of CPVC, yet provide a weld that completely penetrates the metal thickness.

Compacting the composite of the inner layer of CPVC and the intermediate metal layer.

To insure that the outside diameter of the composite of the inner layer of CPVC and the intermediate metal layer is maintained within the desired tolerance, it is circumferentially compacted between each of a succession of oppositely disposed grooved rollers.

Heating the compacted composite of the inner layer of CPVC and the intermediate metal layer.

The compacted composite of the inner layer of CPVC and the intermediate metal layer is heated in an inductance heater to a temperature in the range from 149°C to 171°C (300°F to 340°F) to activate the adhesive and to preheat the metal surface to a temperature at which the metal is to be coated with the outer layer of CPVC.

### Extruding the outer layer of CPVC.

The heated composite of the inner layer of CPVC and the intermediate metal layer is fed into the sealed antechamber of a crosshead die where vacuum is exerted just prior to having the outer layer of CPVC extruded onto the heated adhesive-coated metal. A vacuum in the range of from 31-56cm (12 to 22 inches) of mercury, creates a negative pressure around the metal layer so that the CPVC extruded onto it is forcefully sucked onto the adhesive-coated metal, ensuring activation of the adhesive and a cohesive bond when the CPVC coats the adhesive at a temperature in the range from 193°C to 204°C (300°F to 450°F). The die ensures that the thickness of the outer layer of CPVC is controlled within the desired range.

### Cooling the completed composite pipe.

The hot composite pipe from the crosshead die is cooled in a cooling water tank to room temperature before it is either cut into lengths or rolled into coils of pipe. The steps described above represent the preferred method to make the composite pipe. Other methods could be used as well as variations to the steps described in the preferred method.

Alternatively in some embodiments, a preformed rigid thermoplastic pipe can be coated with an adhesive. A metallic intermediate layer can be placed on the adhesive coated layer. A second layer of adhesive is then applied to the outer side of the metallic intermediate layer. An outer layer can then be extruded on top of the metallic intermediate layer. Optionally, the second adhesive layer, as well as, the thermoplastic layer can be coextruded in a single step using a coextrusion die.

The multilayer composite pipe of exemplary embodiments has the advantages of plastic pipe of the comparable plastic and additional desirable properties. For example, the multilayer composite pipe can be cut to any length in the field using common wheel cutters. The cut end is preferably deburred, and the thermoplastic layer(s) may be chamfered for the ease of assembly. No threading or grooving or other disruption of the pipe ends is required. A bonding agent is simply applied around the end of the conduit on the exposed thermoplastic layer and/or on the exposed innermost surface of the fitting which is formed by an exposed thermoplastic layer. The pieces are joined by inserting the multilayer composite pipe and with the insert in the fitting open end and twisting to distribute the bonding agent. The resulting bonded joint will cure and be pressure supportive within minutes using the bonding agents preferred.

The multilayer composite pipe and conduit system of exemplary embodiments offer significant benefits in ease of use over other known metal, plastic or composite pipe systems. The multilayer composite pipe offers greater strength and rigidity at reduced wall thickness than plastic pipe made of comparable material. Additionally, one exemplary embodiment of the multilayer composite pipe can be easily bent around a tight radius with a pipe bender thereby decreasing the number of joints that need to be used in the fluid conduit system. Furthermore, the multilayer composite pipe can be coupled into a fluid conduit system very easily with less skilled labor and without the expense of threading equipment, flaring equipment, torches, or crimping systems or other expensive mechanical fitting coupling systems.

There are many uses of the exemplary multilayer composite pipe. For example, the multilayer composite pipe can be used in fluid conduit system, including, but not limited to, water heaters, fire sprinkler systems, underslab installations for hot and cold water, central heating systems, pressurized air systems, plumbing systems, gas transportation, underfloor heating, industrial fluid systems, and underslab heating systems.

### EXAMPLES

The examples are presented to compare a fluid handling assembly using an insert (bushing) of this invention (Example 1) with the same fluid handling assembly using a prior art insert (comparative Example 2). The fluid handling system used in both examples was a fire sprinkler system using a 50.8 mm (2 inch) diameter (IPS size) composite pipe, made by the preferred process described above. The metal intermediate layer was 1.0 mm thick steel and the metal was coated on both sides with a bilayer adhesive identified as CIRE-10B from Mercural Corp. the inner and outer layers of CPVC were a standard CPVC pipe composition from Lubrizol Advanced Materials available under the name TempRite®. The thickness of the inner and outer CPVC layers each was 0.6 mm. The pipe, fitting and insert were joined with a standard CPVC solvent cement. The fluid handling assembly was tested at a pressure of 37.99 bar (551 psi) for 6 minutes and for 27.79 bar (403 psi) for 4 hours using water as the fluid.

### EXAMPLE 1

This example used an insert (bushing) that had a flange thickness of 6.299 mm (0.248 inch) thick in the fluid handling assembly. The fluid handling assembly passed the test after exposure to a pressure of 37.99 bar (551 psi) for 6 minutes and for 27.79 bar (403 psi) for 4 hours according to ASTM D2846. No delamination was observed on the composite pipe. The pipe was cut lengthwise in the area of the fitting for a closer examination for delamination and none was found.

### EXAMPLE 2 (COMPARATIVE)

This comparative example was the same as Example 1, except an insert (bushing) was used which had a flange thickness of 1.422 mm (0.056 inch). After subjecting the system to the same pressure test as in Example 1, a bubble or lump was observed on the exterior of the composite just past the fitting as shown by 42 in FIG. 8. Upon cutting the pipe lengthwise, it was discovered that the bubble was the result of delamination at the adhesive bond between the metal layer and the outer CPVC layer. The flange of the insert was distorted and no longer was perpendicular to the hollow body of the insert. This allowed the pressurized water to migrate from the flange area long the bond between the metal and the outer CPVC layer. The thinner flanged insert failed the prescribed test. This example shows that the flange of the insert must have a thickness greater than 1.422 mm (0.056 inch).

## Claims

1. A fluid handling assembly (11) comprising:
a first pipe (1), the first pipe including:
an inner layer (2) comprising a CPVC composition; an intermediate layer (3) comprising a metal at least partially surrounding the inner layer (2); and an outer layer (4) comprising a CPVC composition at least partially surrounding the intermediate layer (3);
and
a first insert (9) having an open ended hollow cylindrical body (10), wherein the body (10) includes an extending flange portion (12) which extends radially outward from an end of the open ended hollow cylindrical body (10), and wherein the body (10) includes an extending portion, wherein the extending portion has an outer diameter less than an inner diameter of the first pipe (1), such that the extending portion of the insert extends inside the first pipe (1), **characterized in that** the axial thickness of the extending flange portion (12) is configured with sufficient dimension such that the extending flange portion (12) is longitudinally nondeformable in order to prevent delamination in said first pipe (1) when fluid pressure in the first pipe (1) is up to 37.99 bar (551 psi) for 6 minutes followed by 27.79 bar (403 psi) for 4 hours while at 82.2 °C (180 °F) at both pressures according to ASTM D2846.

2. The fluid handling assembly (11) of claim 1 wherein for a pipe size of 50.8 mm (2 inches) the flange portion (12) has an axial thickness that is greater than 1.422 mm (0.056 inch).

3. The fluid handling assembly (11) of claim 1 further comprising: a second pipe (1), the second pipe (1) including:
an inner layer (2) comprising a CPVC composition; an intermediate layer (3) comprising a metal at least partially surrounding the inner layer (2); and an outer layer (4) comprising a CPVC composition at least partially surrounding the intermediate layer (3);
a fitting (7); and
a second insert (9) having an open ended hollow cylindrical second body (10), wherein the body (10) includes an extending second flange portion (12) which extends radially outward from an end of the open ended hollow cylindrical second body (10), and wherein the second body (10) includes a second extending portion, wherein the second extending portion has an outer diameter less than an inner diameter of the second pipe (1), such that the second extending portion of the second insert (9) extends inside the second pipe (1), the axial thickness of the extending second flange portion (12) of the second insert (9) being configured of sufficient dimension such that the extending second flange portion (12) is longitudinally nondeformable in order to prevent delamination in said second pipe (1) when fluid pressure in the second pipe (1) is at 37.99 bar (551 psi) for 6 minutes followed by 27.79 bar (403 psi) for 4 hours while at 82.2 °C (180 °F) at both pressures according to ASTM D2846,
wherein the fitting (7) engages the first and second pipes (1) to join the first and second pipes (1) together in fluid tight relation.

4. The fluid handling assembly (11) of claim 3 wherein the second flange portion (12) has an axial thickness greater than 1.422 mm (0.056 inch) for a pipe size of 50.8 mm (2 inches).

5. The fluid handling assembly (11) of claim 3 wherein each of the first and second flange portions (12) has a respective annular outer surface (20), and wherein the fitting (7) is hollow and includes an inner annular fitting surface (18), wherein the outer surface of each flange portion (20) is in fixed engagement with the inner annular fitting surface (18).

6. The fluid handling assembly (11) of Claim 3 wherein said insert (9), said pipe (1), and said fitting (7) are joined together with a CPVC solvent cement.

7. The fluid handling assembly (11) of claim 1 wherein said intermediate layer (3) is steel.

8. The fluid handling assembly (11) of claim 1 wherein said intermediate layer (3) is aluminum.

9. The fluid handling assembly (11) of claim 7 wherein said steel has a thickness of 1.0 +/- 0.3 mm.

10. The fluid handling assembly (11) of claim 8 wherein said aluminum has a thickness of 0.4 +/- 0.2 mm.

11. The fluid handling assembly (11) of claim 1 wherein said inner layer (2) of CPVC and said outer layer (4) of CPVC each have a thickness of 0.6 to 0.8mm.

12. The fluid handling assembly (11) of claim 1 wherein the flange portion (12) of said insert (9) has a minimum thickness of 3.81 mm or 6.35 mm (0.15 or 0.25 inch) for a pipe (1) of outside diameter of 50.8 mm (2 inches) or less.

13. The fluid handling assembly (11) of claim 3 wherein said insert (9) and said fitting (7) comprise CPVC composition and are made by injection molding.

## Patentansprüche

1. Fluidhandhabungsanordnung (11), umfassend:
ein erstes Rohr (1), wobei das erste Rohr Folgendes umfasst:
eine innere Schicht (2), die eine CPVC-Zusammensetzung umfasst;
eine Zwischenschicht (3), die ein Metall, das die innere Schicht (2) wenigstens teilweise umgibt, umfasst; und eine äußere Schicht (4), die eine CPVC-Zusammensetzung umfasst, welche die Zwischenschicht (3) wenigstens teilweise umgibt;
und
einen ersten Einsatz (9), der einen offenendigen hohlen zylindrischen Körper (10) aufweist, wobei der Körper (10) einen ausgedehnten Flanschteil (12) umfasst, der sich ausgehend von einem Ende des offenendigen hohlen zylindrischen Körpers (10) radial nach außen erstreckt, und wobei der Körper (10) einen ausgedehnten Teil umfasst, wobei der ausgedehnte Teil einen äußeren Durchmesser aufweist, der kleiner ist als der innere Durchmesser des ersten Rohrs (1), so dass sich der ausgedehnte Teil des Einsatzes ins Innere des ersten Rohrs (1) hinein erstreckt, **dadurch gekennzeichnet, dass** die axiale Dicke des ausgedehnten Flanschteils (12) mit einer ausreichenden Abmessung konfiguriert ist, so dass der ausgedehnte Flanschteil (12) in Längsrichtung nicht verformbar ist, um eine Delaminierung im ersten Rohr (1) zu verhindern, wenn der Fluiddruck im ersten Rohr (1) bis zu 37,99 bar (551 psi) während 6 Minuten und anschließend 27,79 bar (403 psi) während 4 Stunden beträgt, während bei beiden Drücken 82,2 °C (180 °F) gemäß ASTM D2846 herrschen.

2. Fluidhandhabungsanordnung (11) gemäß Anspruch 1, wobei der Flanschteil (12) bei einer Rohrgröße von 50,8 mm (2 Zoll) eine axiale Dicke aufweist, die größer ist als 1,422 mm (0,056 Zoll).

3. Fluidhandhabungsanordnung (11) gemäß Anspruch 1, weiterhin umfassend: ein zweites Rohr (1), wobei das zweite Rohr (1) Folgendes umfasst:
eine innere Schicht (2), die eine CPVC-Zusammensetzung umfasst;
eine Zwischenschicht (3), die ein Metall, das die innere Schicht (2) wenigstens teilweise umgibt, umfasst; und eine äußere Schicht (4), die eine CPVC-Zusammensetzung umfasst, welche die Zwischenschicht (3) wenigstens teilweise umgibt;
ein Fitting (7); und
einen zweiten Einsatz (9), der einen offenendigen hohlen zylindrischen zweiten Körper (10) aufweist, wobei der Körper (10) einen ausgedehnten zweiten Flanschteil (12) umfasst, der sich ausgehend von einem Ende des offenendigen hohlen zylindrischen zweiten Körpers (10) radial nach außen erstreckt, und wobei der zweite Körper (10) einen zweiten ausgedehnten Teil umfasst, wobei der zweite ausgedehnte Teil einen äußeren Durchmesser aufweist, der kleiner ist als der innere Durchmesser des zweiten Rohrs (1), so dass sich der zweite ausgedehnte Teil des zweiten Einsatzes (9) ins Innere des zweiten Rohrs (1) hinein erstreckt, wobei die axiale Dicke des ausgedehnten zweiten Flanschteils (12) des zweiten Einsatzes (9) mit einer ausreichenden Abmessung konfiguriert ist, so dass der ausgedehnte zweite Flanschteil (12) in Längsrichtung nicht verformbar ist, um eine Delaminierung im zweiten Rohr (1) zu verhindern, wenn der Fluiddruck im zweiten Rohr (1) bis zu 37,99 bar (551 psi) während 6 Minuten und anschließend 27,79 bar (403 psi) während 4 Stunden beträgt, während bei beiden Drücken 82,2 °C (180 °F) gemäß ASTM D2846 herrschen;
wobei das Fitting (7) so an das erste und das zweite Rohr (1) angreift, dass das erste und das zweite Rohr (1) in fluiddichter Beziehung miteinander verbunden sind.

4. Fluidhandhabungsanordnung (11) gemäß Anspruch 3, wobei der zweite Flanschteil (12) bei einer Rohrgröße von 50,8 mm (2 Zoll) eine axiale Dicke aufweist, die größer ist als 1,422 mm (0,056 Zoll).

5. Fluidhandhabungsanordnung (11) gemäß Anspruch 3, wobei der erste und der zweite Flanschteil (12) jeweils eine ringförmige äußere Fläche (20) aufweisen und wobei das Fitting (7) hohl ist und eine innere ringförmige Passfläche (18) umfasst, wobei sich die äußere Fläche der Flanschteile (20) jeweils in festem Angriff an die innere ringförmige Passfläche (18) befindet.

6. Fluidhandhabungsanordnung (11) gemäß Anspruch 3, wobei der Einsatz (9), das Rohr (1) und das Fitting (7) mittels eines lösungsmittelhaltigen CPVC-Klebstoffs miteinander verbunden sind.

7. Fluidhandhabungsanordnung (11) gemäß Anspruch 1, wobei es sich bei der Zwischenschicht (3) um Stahl handelt.

8. Fluidhandhabungsanordnung (11) gemäß Anspruch 1, wobei es sich bei der Zwischenschicht (3) um Aluminium handelt.

9. Fluidhandhabungsanordnung (11) gemäß Anspruch 7, wobei der Stahl eine Dicke von 1,0 +/- 0,3 mm aufweist.

10. Fluidhandhabungsanordnung (11) gemäß Anspruch 8, wobei das Aluminium eine Dicke von 0,4 +/- 0,2 mm aufweist.

11. Fluidhandhabungsanordnung (11) gemäß Anspruch 1, wobei die innere Schicht (2) aus CPVC und die äußere Schicht (4) aus CPVC jeweils eine Dicke von 0,6 bis 0,8 mm aufweisen.

12. Fluidhandhabungsanordnung (11) gemäß Anspruch 1, wobei der Flanschteil (12) des Einsatzes (9) für ein Rohr (1) mit einem äußeren Durchmesser von 50,8 mm (2 Zoll) oder weniger eine minimale Dicke von 3,81 mm oder 6,35 mm (0,15 oder 0,25 Zoll) aufweist.

13. Fluidhandhabungsanordnung (11) gemäß Anspruch 3, wobei der Einsatz (9) und das Fitting (7) eine CPVC-Zusammensetzung umfassen und durch Spritzgießen hergestellt sind.

## Revendications

1. Ensemble de manipulation de fluide (11) comprenant :
un premier tuyau (1), le premier tuyau comprenant :
une couche interne (2) comprenant une composition de PVC-C ; une couche intermédiaire (3) comprenant un métal entourant au moins partiellement la couche interne (2) ; et une couche externe (4) comprenant une composition de PVC-C entourant au moins partiellement la couche intermédiaire (3) ;
et
un premier insert (9) ayant un corps cylindrique creux à extrémité ouverte (10), dans lequel le corps (10) comprend une partie de bride d'extension (12) qui s'étend radialement vers l'extérieur depuis une extrémité du corps cylindrique creux à extrémité ouverte (10), et dans lequel le corps (10) comprend une partie d'extension, dans lequel la partie d'extension a un diamètre externe inférieur à un diamètre interne du premier tuyau (1), de sorte que la partie d'extension de l'insert s'étende à l'intérieur du premier tuyau (1), **caractérisé en ce que** l'épaisseur axiale de la partie de bride d'extension (12) est configurée avec une dimension suffisante pour que la partie de bride d'extension (12) soit non déformable longitudinalement afin d'empêcher une déstratification dans ledit premier tuyau (1) lorsque la pression de fluide dans le premier tuyau (1) est à 37,99 bars (551 psi) pendant 6 minutes suivie de 27,79 bars (403 psi) pendant 4 heures tout en étant à 82,2 °C (180 °F) aux deux pressions selon la norme ASTM D2846.

2. Ensemble de manipulation de fluide (11) selon la revendication 1, dans lequel pour une taille de tuyau de 50,8 mm (2 pouces) la partie de bride (12) a une épaisseur axiale qui est supérieure à 1,422 mm (0,056 pouce).

3. Ensemble de manipulation de fluide (11) selon la revendication 1, comprenant en outre : un second tuyau (1), le second tuyau (1) comprenant :
une couche interne (2) comprenant une composition de PVC-C ; une couche intermédiaire (3) comprenant un métal entourant au moins partiellement la couche interne (2) ;
et une couche externe (4) comprenant une composition de PVC-C entourant au moins partiellement la couche intermédiaire (3) ;
un raccord (7) ; et
un second insert (9) ayant un second corps (10) cylindrique creux à extrémité ouverte, dans lequel le corps (10) comprend une seconde partie de bride d'extension (12) qui s'étend radialement vers l'extérieur depuis une extrémité du second corps cylindrique creux à extrémité ouverte (10), et dans lequel le second corps (10) comprend une seconde partie d'extension, dans lequel la seconde partie d'extension a un diamètre externe inférieur à un diamètre interne du second tuyau (1),
de sorte que la seconde partie d'extension du second insert (9) s'étende à l'intérieur du second tuyau (1), l'épaisseur axiale de la seconde partie de bride d'extension (12) du second insert (9) étant configurée avec une dimension suffisante pour que la seconde partie de bride d'extension (12) soit non déformable longitudinalement afin d'empêcher une déstratification dans ledit second tuyau (1) lorsque la pression de fluide dans le second tuyau (1) est à 37,99 bars (551 psi) pendant 6 minutes suivie de 27,79 bars (403 psi) pendant 4 heures tout en étant à 82,2 °C (180 °F) aux deux pressions selon la norme ASTM D2846,
dans lequel le raccord (7) met en prise les premier et second tuyaux (1) pour assembler les premier et second tuyaux (1) en relation d'étanchéité aux fluides.

4. Ensemble de manipulation de fluide (11) selon la revendication 3, dans lequel la seconde partie de bride (12) a une épaisseur axiale supérieure à 1,422 mm (0,056 pouce) pour une taille de tuyau de 50,8 mm (2 pouces).

5. Ensemble de manipulation de fluide (11) selon la revendication 3, dans lequel chacune des première et seconde parties de bride (12) a une surface externe annulaire respective (20), et dans lequel le raccord (7) est creux et comprend une surface de raccord annulaire interne (18), dans lequel la surface externe de chaque partie de bride (20) est en prise fixe avec la surface de raccord annulaire interne (18).

6. Ensemble de manipulation de fluide (11) selon la revendication 3, dans lequel ledit insert (9), ledit tuyau (1) et ledit raccord (7) sont assemblés avec une colle à solvant PVC-C.

7. Ensemble de manipulation de fluide (11) selon la revendication 1, dans lequel ladite couche intermédiaire (3) est en acier.

8. Ensemble de manipulation de fluide (11) selon la revendication 1, dans lequel ladite couche intermédiaire (3) est en aluminium.

9. Ensemble de manipulation de fluide (11) selon la revendication 7, dans lequel ledit acier a une épaisseur de 1,0 +/- 0,3 mm.

10. Ensemble de manipulation de fluide (11) selon la revendication 8, dans lequel ledit aluminium a une épaisseur de 0,4 +/- 0,2 mm.

11. Ensemble de manipulation de fluide (11) selon la revendication 1, dans lequel ladite couche interne (2) en PVC-C et ladite couche externe (4) en PVC-C ont chacune une épaisseur de 0,6 à 0,8 mm.

12. Ensemble de manipulation de fluide (11) selon la revendication 1, dans lequel la partie de bride (12) dudit insert (9) a une épaisseur minimale de 3,81 mm ou 6,35 mm (0,15 ou 0,25 pouce) pour un tuyau (1) de 50,8 mm (2 pouces) de diamètre extérieur ou moins.

13. Ensemble de manipulation de fluide (11) selon la revendication 3, dans lequel ledit insert (9) et ledit raccord (7) comprennent une composition de PVC-C et sont réalisés par moulage par injection.
